# EUROPEAN PATENT APPLICATION

(11) **EP 3 918 920 A1**
(43) Date of publication of application: **08.12.2021**
(21) Application number: 20747764.7
(22) Date of filing: 23.01.2020
(51) Int. Cl.: A23J 3/00, A23J 3/14, A23J 3/16, A23L 13/00, A23L 27/10

(54) **LIQUID SEASONING CONTAINING MEAT-LIKE FOOD PRODUCT, METHOD FOR PRODUCING LIQUID SEASONING, MEAT-LIKE FOOD PRODUCT HAVING ENHANCED FLESHY TASTE, AND METHOD FOR PRODUCING MEAT-LIKE FOOD PRODUCT**

(30) Priority: 30.01.2019 JP 2019014310
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: KAKEDA, Miho, Handa-shi, Aichi 475-8585 (JP)
(74) Representative: Mewburn Ellis LLP
(86) International application number: PCT/JP2020/002287
(87) International publication number: WO 2020/158562

(57) **Abstract**

An object of this disclosure is to provide a liquid seasoning containing a plant-based meat product to which flavor similar to a cooked and processed meat and meat texture (soft smooth texture and juiciness of meat) when eating except texture (grain texture and fiber texture) by a physical resistance when chewing are given, and a method of producing such a liquid seasoning, as well as a plant-based meat product having improved meat texture and a method of producing such a plant-based meat product. This disclosure further provides a method of producing a liquid seasoning containing a plant-based meat product, the method includes using a seasoning liquid, a food having emulsification capability, a dry textured vegetable protein, a food containing water-soluble polysaccharide, and edible oil/fat, as essential raw material components, mixing these essential raw material components, emulsifying the seasoning liquid, and performing a heating process at 70 °C or more and less than 100 °C after impregnating the dry textured vegetable protein with the obtained emulsified liquid seasoning.

## Description

### TECHNICAL FIELD

This disclosure relates to a liquid seasoning containing a plant-based meat product and a method of producing the liquid seasoning as well as a plant-based meat product having improved meat texture and a method of producing the plant-based meat product.

### BACKGROUND ART

For a recent health-conscious reason, a plant-based meat product made from, for example, a soybean protein is popular as a substitute for a meat.

A soybean protein which is frequently used for producing a plant-based meat product is also called a soy meat, and various soy meats (for example, block type, sliced type (fillet type), minced type, and granular type) are commercially available.

The preparation of a substitute for a meat with these soy meats has some problems. The problems include unsoaked flavor, smell of soybeans, too soft texture, and crumbling. Methods of solving these problems include, as for the smell of the soybeans, a method of extracting and removing an unpleasant component by sufficiently soaking into water and washing before use, as for the unsoaked favor, a method of sufficiently draining after cleaning, as for the texture, a method of deep frying in oil by coating with rice flour, for example, and, as for the prevention of the crumbling, a method of gently squeezing when draining.

However, these methods involve a time-consuming pretreatment such as soaking in water, require a skill such as adjustment of draining, and limit a menu such as deep frying in oil. For these reasons, these methods are not always simple generic effective methods as a method of preparing a plant-based meat product.

Non-Patent Literature 1 describes a development example regarding a textured soybean protein, and shows various methods of producing a textured soybean protein which is a base for a plant-based meat product. However, it is not always possible for the method of producing a textured soybean protein to improve meat texture of a plant-based meat product and to achieve a quality which can be directly used as a substitute for a meat. In order to imitate meat texture (taste and texture) of a cooked meat, it is necessary to improve seasoning, a cooking process, and the like of an existing textured soybean protein. Accordingly, the above problems are still left for the use of the textured soybean protein as common problems.

For example, Patent Literature 1 discloses an elastic and flexible textured soybean protein food product with improved texture and less odor. Patent Literature 2 discloses a plant-based meat product similar to a real meat. Such a plant-based meat product does not have smell specific to a vegetable protein derived from a raw material, and has a good teste retaining effect which does not easily flat taste by chewing when eating. Patent Literature 3 discloses a method of producing a favorably flavored granulated soybean protein processed food product without a soybean flour like foreign taste specific to a soybean protein.

According to the method of Patent Literature 1, the texture and the flavor of the soybean protein food product can be improved by heating after absorbing aqueous dispersion of heat-coagulated β-1, 3-glucan. However, as β-1, 3-glucan has gelling characteristics by heating and does not have a reversibility, the obtained soybean protein food product does not show a change in texture (grain texture and fiber texture of meat) similar to a meat by various cooking processes. According to the method of Patent Literature 2, although a product which is obtained by adding cyclodextrin including a seasoning component into a main raw material based on a vegetable protein, and by processing the obtained mixture with an extruder under hydration has less vegetable protein smell, a good taste retaining effect, and improved flavor, the product which is obtained by proccing with the extruder requires a complex step such as an extruder process, and the product lacks fresh meat texture (soft smooth texture and juiciness of meat) just after a cooking process even though it can be directly used. According to the method of Patent Literature 3, although the flavor is improved by performing a heating process to a granulated soybean protein containing sugar alcohol and *miso* (fermented soybean paste), the method cannot solve the problem of the whole texture and flavor.

The existing soybean protein material almost achieves texture (grain texture and fiber texture of meat) by a physical resistance when chewing a meat, and is required to solve the above problems, except the texture (grain texture and fiber texture of meat) by a physical resistance when chewing the meat, for example, the unsoaked flavor, the smell of soybeans, and the lacking of meat texture (soft smooth texture and juiciness of meat) when eating except the texture (grain texture and fiber texture) by a physical resistance when chewing, in order to prepare a plant-based meat product similar to a meat by using a soybean protein only.

### CITATION LIST

### Patent Literature

Patent Literature 1: JP 1994-90686A
Patent Literature 2: JP1994-98686A
Patent Literature 3: JP2012-39953A

### Non-Patent Literature

Progress of Textured Soybean Protein Food Product, Cooking Science, Vol. 20, No. 4, (1987) Page 42-52

### SUMMARY

### Technical Problem

The present disclosure uses textured vegetable protein such as an existing soybean protein material, and does not need a complex pretreatment, a special raw material, and a special process. An object of the present disclosure is to provide a liquid seasoning containing a plant-based meat product to which flavor (sufficiently soaked flavor and no odor derived from vegetable soybean protein) similar to a cooked and processed meat and meat texture (soft smooth texture and juiciness of meat) when eating except texture (grain texture and fiber texture) by a physical resistance when chewing are given, and a method of producing such a liquid seasoning, as well as a plant-based meat product having improved meat texture and a method of producing such a plant-based meat product.

### Solution to Problem

Through intensive studies conducted in view of the above circumstances, the inventors of this disclosure have newly found that, by focusing on unconventional effects of a food having emulsification capability and a food containing water-soluble polysaccharide, it is possible to simultaneously and easily solve the above problems. Through further intensive studies based on the above knowledge, the inventors have made the following invention.

To be specific, the present disclosure provides the following [1] to [13]. [1] A method of producing a liquid seasoning containing a plant-based meat product, the method includes using a seasoning liquid, a food having emulsification capability, a dry textured vegetable protein, a food containing water-soluble polysaccharide, and edible oil/fat, as essential raw material components, mixing the essential raw material components, emulsifying the seasoning liquid, and performing a heating process at 70 °C or more and less than 100 °C after impregnating the dry textured vegetable protein with the obtained emulsified liquid seasoning. [2] The method of producing a liquid seasoning according to [1], wherein the seasoning liquid contains acetic acid and/or ethanol. [3] The method of producing a liquid seasoning according to [2], wherein a content of the acetic acid in the seasoning liquid is 1.0 mass% or less. [4] The method of producing a liquid seasoning according to [2], wherein a content of the ethanol in the seasoning liquid is 5.0 mass% or less. [5] The method of producing a liquid seasoning according to any one of [1] to [4], wherein a content of a water-soluble polysaccharide of the food containing water-soluble polysaccharide in the seasoning liquid is 0.02 mass% or more and 0.9 mass% or less. [6] The method of producing a liquid seasoning according to any one of [1] to [5], wherein the dry textured vegetable protein is a dry textured soybean protein. [7] The method of producing a liquid seasoning according to any one of [1] to [6], wherein the food having emulsification capability is a non-heat resistant emulsified food which loses the emulsification capability by the heating process. [8] The method of producing a liquid seasoning according to [7], wherein the non-heat resistant emulsified food under a temperature of less than 100 °C is one or more selected from, *miso,* egg yolk, *tobanjan,* soy sauce, and soy milk. [9] The method of producing a liquid seasoning according to any one of [1] to [8], wherein the food containing water-soluble polysaccharide is one or more selected from *konnyakuimo* powder, extract of kelps, and *nagaimo* powder. [10] A liquid seasoning containing a plant-based meat product, which is obtained by the method according to any one of claims [1] to [9]. [11] A method of producing a plant-based meat product, the method includes producing a liquid seasoning containing a plant-based meat product by the method according to any one of [1] to [9], and taking out the contained plant-based meat product from the obtained liquid seasoning. [12] A plant-based meat product having improved meat texture, which is obtained by the method according to [11]. [13] A method of producing a plant-based meat product having improved meat texture, the method includes using a seasoning liquid, a food having emulsification capability, a dry textured vegetable protein, a food containing water-soluble polysaccharide, and edible oil/fat, as essential raw material components, mixing the essential raw material components, emulsifying the seasoning liquid, performing a heating process at 70 °C or more and less than 100 °C after impregnating the dry textured vegetable protein with the emulsified seasoning liquid to produce a liquid seasoning containing a plant-based meat product, and taking out the contained plant-based meat product from the obtained liquid seasoning.

### Advantageous Effects

First to Fifth Embodiments which will be described below in detail provides a liquid seasoning containing a plant-based meat product to which flavor (sufficiently well flavored and without odor derived from vegetable soybean protein) similar to a cooked and processed meat and meat texture (soft smooth texture and juiciness of meat) when eating except texture (grain texture and fiber texture) by a physical resistance when chewing are added by using textured vegetable protein such as an existing soybean protein material, and without a complex pretreatment, a special raw material, and a special process. The embodiments further provide a method of producing such a liquid seasoning, as well as a plant-based meat product having improved meat texture and a method of producing such a plant-based meat product. The plant-based meat products provided by First to Fifth Embodiments are extremely close to meat menus cooked and processed with a meat.

### DESCRIPTION OF EMBODIMENT

Hereinafter, embodiments of this disclosure will be described in detail. It should be understood that this disclosure is not limited to the following embodiments (first to fifth Embodiments) and can be implemented in any variant so long as such a variant does not deviate from the gist of this disclosure.

### First Embodiment: Method of Producing Liquid Seasoning Containing Plant-Based Meat Product

A first embodiment relates to a method of producing a liquid seasoning containing a plant-based meat product. The method includes using a seasoning liquid, a food having emulsification capability, a dry textured vegetable protein, a food containing water-soluble polysaccharide, and edible oil/fat, as essential raw material components, mixing these essential raw material components, emulsifying the seasoning liquid, and performing a heating process at 70 °C or more and less than 100 °C after impregnating the dry textured vegetable protein with the obtained emulsified seasoning liquid.

"Seasoning liquid" in the first embodiment is not limited in any way. For example, the kind, the blending amount, and the combination of the raw materials, as well as the presence or absence and the concentration of the ingredient are appropriately selected and adjusted according to desired flavor and its intensity to be given to the textured vegetable soybean protein. The raw material of the seasoning liquid includes a ginger (*e.g*., frozen minced ginger), a garlic (*e.g.*, frozen grated garlic), and red pepper (*e.g.*, red pepper powder) for seasoning, in addition to sugar, soy sauce, and salt, for example. As described in the above [2], it is preferable for the seasoning liquid to contain acetic acid and/or ethanol. When the seasoning liquid contains the acetic acid and/or the ethanol, it is possible to adjust unharmonious due to a viscosity derived from the water-soluble polysaccharide, and to strongly control the unpleasant smell and the unpleasant taste of the textured vegetable protein. It may be possible for the acetic acid and/or the ethanol to be blended as vinegar, *mirin* (sweet sake used as seasoning), *sake* (rice wine), or the like which contains the acetic acid and/or the ethanol. The derivation of the acetic acid and the ethanol is not limited in any way. Hereinafter, "content in seasoning liquid" is meant to be a condition in which the seasoning liquid contains a solid object such as an ingredient.

It is not always necessary for the seasoning liquid to contain the acetic acid in order to achieve the effect of the present disclosure. However, it is preferable for the content of the acetic acid in the seasoning liquid to be 0.05 mass% or more as the concentration in the seasoning liquid in order to further control the odor derived from the textured vegetable protein. On the other hand, as described in the above [3], it is preferable for the upper limit to be 1.0 mass% or less, more preferable to be 0.75 mass% or less, further preferable to be 0.5 mass% or less, and still further preferable to be 0.35 mass% or less, in terms of the impact (probably slow hydrolytic action under heating) on the water-soluble polysaccharide due to the acetic acid.

It is not always necessary for the seasoning liquid to contain the ethanol in order to achieve the effect of the present disclosure. However, it is preferable for the content of the ethanol in the seasoning liquid to be 0.5 mass% or more as the concentration in the liquid seasoning in order to further control the odor derived from the textured vegetable protein. On the other hand, as described in the above [4], it is preferable for the upper limit to be 5.0 mass% or less, more preferable to be 4.0 mass% or less, further preferable to be 3.0 mass% or less, and still further preferable to be 2.0 mass% or less, in terms of the impact (probable control of viscosity of water-soluble polysaccharide) on the water-soluble polysaccharide due to the ethanol.

Next, "food having emulsification capability" in the first embodiment includes an emulsifier (*e.g.*, soybean lecithin) as a food additive and a food product (*e.g.*, *miso,* egg, *tobanjan* (Chinese chili bean sauce), soy sauce, and soy milk) having emulsification capability except the emulsifier. As long as the food having emulsification capability is "non-heat resistant emulsified food which loses the emulsification capability by the heating process" (hereinafter, may be referred to as "non-heat resistant emulsified food under heating process") as described in the above [7], the oil in the seasoning liquid is separated after the heating process at 70 °C or more and less than 100 °C in the first embodiment. Accordingly, in the aspect in which the plant-based meat product is separated from the liquid seasoning containing the plant-based meat product, which is produced in the first embodiment, to be used, the plant-based meat product can be separated without adhering to an excessive oil soluble component or water soluble component to the plant-based meat product. Namely, the plant-based meat product can be taken out after sucking the separated water layer and oil layer. Accordingly, it is preferable to use "non-heat resistant emulsified food which loses the emulsification capability by the heating process", i.e., "non-heat resistant emulsified food under heating process" as "food having emulsification capability", as described in the above [7]. Such "non-heat resistant emulsified food under heating process" includes *miso,* egg yolk, *tobanjan,* soy sauce, and soy milk, and it is preferable to use one or more selected from these, as described in the above [8].

Moreover, "dry textured vegetable protein" in the first embodiment is meant to be a dried textured vegetable protein, and is not limited in any way as long as the protein derived from beans (*e.g.*, soybean) or grains (*e.g*., wheat) is textured by an extruder, for example, maintains a solid type (*e.g*., granulated type, minced type, block type, and sliced type) except a powder type, and is dried. In this disclosure, the dry textured vegetable protein can be directly used (dried state) without any pretreatment.

As described above, "dry textured vegetable protein" for use in this disclosure is meant to be a dried textured vegetable protein, and it is not especially limited as described above. However, "dry textured soybean protein" which is a dry textured soybean protein derived from a soybean is preferable as described in the above [6], in terms of easiness in acquisition and affinity with oil/fat. Herein, "dried state" is meant to have a water activity and a water content which can be directly distributed at an ordinary temperature.

Conventionally, the dry textured vegetable protein has required the deodorizing and deflavoring by a pretreatment such as soaking in heated water because it has unpleasant smell and unpleasant flavor derived from a raw material. However, even though the dry textured vegetable protein was drained, the dry textured vegetable protein sucked water and was expanded by the pretreatment. For this reason, even though the dry textured vegetable protein was soaked in the seasoning liquid after that, the seasoning liquid and the water were not sufficiently replaced, and thus the seasoning liquid was not sufficiently soaked. On the other hand, the unpleasant flavor is felt when the pretreatment is not performed. However, by using the method in the first embodiment, the dry textured vegetable protein is sufficiently impregnated with the thick seasoning liquid from the beginning. Accordingly, the unpleasant flavor is masked and also the unpleasant smell is not felt, as well as very strong soaked flavor which is a contradiction problem can be simultaneously solved.

"Food containing water-soluble polysaccharide" in the first embodiment is not especially limited as long as it is a food containing a water-soluble polysaccharide, and may be a food naturally containing a water-soluble polysaccharide without containing a thickener which is a food additive (specified additive and existing additive defined by Food Sanitation Law). Herein, the specific example of the food containing water-soluble polysaccharide includes, as plants, tubers and roots, vegetables, mushrooms, kelps, wakame seaweeds, algae, bean processed foods, fruits, and nuts. The tuber and roots include *konnnyaku imo* (Amorphophallus konjac), *yamaimo* (Dioscorea japonica) (*jinenjyo, jinenjyou, yamanoimo*) *nagaimo* (Dioscorea opposita (Dioscorea polystachya)) (*yamato imo, tsukuneimo*) *yamuimo* (yam), *kikuimo* (Helianthus tuberosus, *taroimo* (taro) (*satoimo* (Colocasia esculenta), *ebiimo* (Colocasia antiquorum var), *eguimo, karanoimo, takenokoimo, taimo*), and lotus root. The Vegetables includes okra, mulukhiya, Basellaceae, Angelica keiskei, *kinjisou,* watershield, *oka* seaweed, aloe vera, and cactus. The mushrooms include *nameko.* The kelps include in particular *tororo konbu, kagome konbu.* The *wakame* seaweeds includes in particular *mekabu* (root of wakame). The algae include *mozuku,* Sargassum horneri, Ecklonia kurome, Gelidiaceae, and Gracilaria. The bean processed foods include *natto* (fermented soybeans). The fruits and nuts include *tamarind* (Tamarindus), jackfruit, mistletoe, and cactus. The specific example of the food containing water-soluble polysaccharide includes, as animal foods, milk processed foods. The milk processed foods include Caspian sea yogurt and other mucilaginous fermented milk. It is preferable to use, among these, the plants as the food containing water-soluble polysaccharide because these dry easily, more preferably to use the tubers and roots and the algae because these have less admixture constituents. In particular, as described in the above [9], it is preferable to use *konnyakuimo* powder, extract of kelps, and *nagaimo* powder (in particular, *yamatoimo* powder), and it is preferable to use one or more selected from these. However, it is most preferable to use the *konnyakuimo* in terms of the achievement of the effect of the present disclosure and on impact on the flavor of the liquid seasoning. In addition, the above *"yamatoimo"* is one of *nagaimo* (Dioscorea opposita (Dioscorea polystachya)), and may be referred to as *tukuneimo* (Chinese yam).

"Edible oil/fat" in the first embodiment are not limited in any way. For example, the type and the blending amount are appropriately selected and adjusted according to desired flavor and its strength to be given to the above described dry textured vegetable protein. "Edible oil/fat" may be solid fat which becomes a solid at 20 °C or liquid oil which becomes liquid at 20 °C, may be used by heating the seasoning liquid such that these become liquid, and may be used together. It is preferable to use, for example, solid lard at 20 °C together with liquid canola oil and sesame oil at 20 °C in terms of further enhancing meat texture (smooth soft texture and juiciness of meat) when eating.

In the first embodiment, as described above, the seasoning liquid, the food having emulsification capability, the dry textured vegetable protein, the food containing water-soluble polysaccharide, and the edible oil/fat are used as the essential raw material components. In addition to these essential raw material components, an ingredient for flavoring such as vegetables, beans, and spices, and various food materials, and seasonings for seasoning and toning can be used according to needs.

In the first embodiment, the above essential raw material components are mixed, and the seasoning liquid is emulsified (mixing and emulsifying steps). The seasoning liquid thus obtained is referred to as "emulsified seasoning liquid". The emulsified seasoning liquid includes a finely granulated oil soluble component and water-soluble component. When mixing and emulsifying, the seasoning liquid, the food having emulsification capability, the dry textured vegetable protein, the food containing water-soluble polysaccharide, and the edible oil/fat are put in a blending tank to be mixed and agitated.

The blending amount of the food having emulsification capability may be a quantity which can emulsify the seasoning liquid, and cannot be uniquely defined because it differs depending on an emulsifying force of the food having emulsification capability. For example, soybean lecithin generally has about 0.1 to 2.0 mass% of the whole liquid seasoning. *Miso* generally has about 1.0 to 10.0 mass% larger than that of the soybean lecithin. However, the quantities are not limited thereto.

The blending amount of the food containing water-soluble polysaccharide of the whole liquid seasoning is generally 0.02 mass% or more. However, it is preferable to be 0.025 mass% or more, more preferable to be 0.035 mass% or more, and further preferable to be 0.05 mass% or more, in terms of the achievement of the effect of the present disclosure as described below. On the other hand, the upper limit is generally 0.9 mass% or less, in terms of the unharmonious due to the excessive viscosity. However, it is preferable for the upper limit to be 0.75 mass% or less, and especially preferable to be 0.5 mass% or less, in terms of preferable meat texture. Accordingly, it is preferable for the blending amount of the food containing water-soluble polysaccharide of the whole liquid seasoning to be 0.02 mass% or more and 0.9 mass% or less, as described in the above [5].

At the same time of the above mixing and emulsifying steps, an impregnating step, i.e., a step of being impregnated the dry textured vegetable protein with the emulsified seasoning liquid obtained as described above is performed. In the first embodiment, as described above, the dry textured vegetable protein is impregnated with the emulsified seasoning liquid obtained as described above, so that the dry textured vegetable protein is easily impregnated with the finely granulated oil soluble component and water-soluble component simultaneously, and oil/fat texture and gravy texture which are necessary as the plant-based meat food can be strongly given.

In the first embodiment, the heating process step is performed as the final step. The heating process temperature in the first embodiment is not limited at all as long as it does not affect the achievement of the effect of the present disclosure. However, the heating process temperature may be generally 70 °C or more and less than 100 °C and the processing time may be appropriately adjusted, in terms of the fact that the flavor and the physical property may be deteriorated by the heat load to the ingredient and the seasoning liquid. When the heating process temperature is 70 °C or more and less than 100 °C, as described above, the oil of the seasoning liquid is separated after the heating process at 70 °C or more by using "non-heat resistant emulsified food which loses the emulsification capability by the heating process" as "food having emulsification capability". Accordingly, in the aspect in which the plant-based meat product is separated from the liquid seasoning containing the plant-based meat product which is produced in the first embodiment to be used, the plant-based meat product can be separated without adhering to an excessive oil soluble component and water soluble component to the plant-based meat product, namely, the plant-based meat product can be taken out after sucking the separated water layer and oil layer.

The objective liquid seasoning containing the plant-based meat product in the first embodiment can be thus produced. "Plant-based meat product" which is obtained herein is a food product in which the dry textured vegetable protein used as the raw material component is impregnated with a rich oil soluble component and water soluble component, and sufficient and preferable flavor as the plant-based meat product, which is extremely similar to a meat, is given without using an animal origin raw material.

In the first embodiment, by mixing the food containing the water-soluble polysaccharide with the seasoning liquid, the water-soluble polysaccharide dispersed in the seasoning liquid adheres to the (dry) textured vegetable protein. The water-soluble polysaccharide generates a strong viscosity with its small amount by the high absorbency and expansibility, enters into the surface or the inside of the seasoned (dry) textured vegetable protein, enhances the fine structure of the textured vegetable protein, not only improves the crumble property, and but also coats the surface of the seasoned textured vegetable protein. By coating with the water-soluble polysaccharide, the seasoned (dry) textured vegetable protein can maintain inside thereof the seasoning liquid made from the oil soluble component and water soluble component impregnated inside, and has meat texture (soft smooth texture and juiciness of meat) when eating. Although the effect is achieved when the seasoned (dry) textured vegetable protein is contained in the seasoning liquid, the surface of the seasoned (dry) textured vegetable protein achieves smooth meat texture even when the seasoned (dry) textured vegetable protein is separated from the seasoning liquid through the coating with the water-soluble polysaccharide. The seasoned (dry) textured vegetable protein can be eaten as a delicious plant-based meat product extremely similar to a meat menu.

### Second Embodiment: Liquid Seasoning Containing Plant-Based Meat Product

As described in the above [10], a second embodiment relates to a liquid seasoning containing a plant-based meat product obtained by the method according to any one of the above [1] to [9]. The details of the method according to any one of the above [1] to [9] are as described in the first embodiment.

The liquid seasoning described in the second embodiment obtained by the method according to any one of the above [1] to [9] relates to a liquid seasoning defined by a producing method. The liquid seasoning described in the second embodiment is a liquid seasoning containing a plant-based meat product to which flavor similar to a cooked meat (sufficiently soaked flavor and no odor derived from vegetable protein) and meat texture (soft smooth texture and juiciness of meat) when eating except texture (grain texture and fiber texture) by a physical resistance when chewing are given. However, in order to numerically express the flavor similar to the cooked meat (sufficiently soaked flavor and no odor derived from vegetable protein) and the meat texture (soft smooth texture and juiciness of meat) when eating except texture (grain texture and fiber texture) by a physical resistance when chewing, it is necessary to measure various components and mechanical properties, and further it is necessary to use an expensive machine for the measurement. It is thus impossible and impractical to measure all of them before filing an application. It is thus apparent that the liquid seasoning in the second embodiment should be defined by a producing method.

According to the liquid seasoning in the second embodiment which is obtained by the method according to any one of the above [1] to [9], the liquid seasoning containing the plant-based meat product to which the flavor (sufficiently soaked flavor and no odor derived from vegetable protein) similar to a cooked meat and the meat texture (soft smooth texture and juiciness of meat) when eating except the texture (grain texture and fiber texture) by a physical resistance when chewing are given is provided.

### Third Embodiment: Method of Producing Plant-Based Meat Product

As described in the above [11], the third embodiment relates to a method of producing a plant-based meat product, produces a liquid seasoning containing the plant-based meat product by the method according to any one of the above [1] to [9], and takes out the contained plant-based meat product from the obtained liquid seasoning.

In the third embodiment, the details of the method according to any one of the above [1] to [9] are as described in the first embodiment.

In the third embodiment, the liquid seasoning containing the plant-based meat product is produced by the method according to any one of the above [1] to [9], as described above. Next, the contained plant-based meat product is taken out from the obtained liquid seasoning. The plant-based meat product contained in the liquid seasoning is flaked and/or ground according to the type of the dry textured vegetable protein and the type of the food containing the water-soluble polysaccharide to be used. Thus, such a plant-based meat product is taken out from the liquid seasoning by appropriate means.

In the third embodiment, in order to produce the liquid seasoning containing the plant-based meat product and the plant-based meat product, for example, a mixing container such as a blending tank is used, the seasoning liquid, the food having emulsification capability, and the food containing the water-soluble polysaccharide are put in the mixing container, and then the dry textured vegetable protein is put in the mixing container with a container such as a basket, and the edible oil/fat are further put in the mixing container to be mixed and emulsified. Then, the dry textured vegetable protein is impregnated with the water-soluble polysaccharide dispersed in the seasoning liquid to be adhered, and the heating process is further performed. As the liquidity after the heating process has two components (oil separation type) by the oil separation, it is only necessary to take out the textured vegetable protein (plant-based meat product) with/to which the water-soluble polysaccharide is impregnated/adheres with the entire container such as a basket after sucking the oil phase of the surface layer. The plant-based meat product is thereby obtained by the third embodiment.

### Fourth Embodiment: Plant-Based Meat Product Having Improved Meat Texture

As described in the above [12], a fourth embodiment relates to a plant-based meat product having improved meat texture, which is obtained by the method according to the above [11].

The method described in the above [11] is as described in the third embodiment. The plant-based meat product of the fourth embodiment described in the above [12], which is obtained by the method described in the above [11], has improved meat texture. Herein, "meat texture" is meat to be meat texture when eating, namely, soft smooth texture and juiciness of meat, and also is meant to be texture by a physical resistance when chewing, namely, meat texture except grain texture and fiber texture.

### Fifth Embodiment: Method of Producing Plant-Based Meat Product Having Improved Meat Texture

As described in the above [13], a fifth embodiment relates to a method of producing a plant-based meat product having improved meat texture. In order to produce the plant-based meat product having improved meat texture, a seasoning liquid, a food having emulsification capability, a dry textured vegetable protein, a food containing water-soluble polysaccharide, and edible oil/fat are used as essential raw material components, these essential raw material components are mixed, the seasoning liquid is emulsified, and a heating process is performed at 70 °C or more and less than 100 °C after impregnating the dry textured vegetable protein with the obtained emulsified liquid seasoning to produce the liquid seasoning containing the plant-based meat product, and the plant-based meat product contained in the liquid seasoning is taken out from the obtained liquid seasoning.

In the fifth embodiment, the seasoning liquid, the food having emulsification capability, the dry textured vegetable protein, and the food containing water-soluble polysaccharide, and the edible oil/fat, which are the essential raw material components, are as described in the first embodiment. Each step is also as described in the first and third embodiments. The plant-based meat product having improved meat texture is thereby obtained by the fifth embodiment. Herein, "meat texture" is meant to be meat texture when eating, namely, soft smooth texture and juiciness of meat, and also is meant to be texture by a physical resistance when chewing, namely, meat texture except grain texture and fiber texture, as described in the fourth embodiment.

### Example

### First Example: Preparation of Flaked Plant-Based Meat Product Contained Liquid Seasoning

Herein, the preparation of the liquid seasoning containing the plant-based meat product described in the first embodiment was studied. The following seasoning liquid, food having emulsification capability, dry textured vegetable protein, food containing water-soluble polysaccharide, and edible oil/fat were used as the essential raw material components.

A dry granulated soybean protein (granulated type having about 2.5 mm in diameter) was selected as the example of the dry textured vegetable protein, and *konnyakuimo* powder (glucomannan content: 47.5 mass%) was selected as the example of the food containing water-soluble polysaccharide. Next, *miso* was selected as the food having emulsification capability. Canola oil and lard were also selected as the edible oil/fat. The respective raw materials and blending amounts of the seasoning liquid are as shown in Table 1. More specifically, as the seasoning liquid, sugar, soy sauce, waxy cornstarch (raw starch), salt, frozen minced ginger, frozen grated garlic, and chili powder were used, and brewed vinegar (acetic acid content: 15 mass%) and *mirin* (ethanol content: 25 mass% of ethanol) were also used according to the recipe.

Among these, sugar, soy sauce, waxy cornstarch, salt (brewed vinegar or *mirin* according to recipe), frozen minced ginger, frozen grated garlic, and chili powder were put in a blending tank having heated water at 60 °C, and *miso* which is the food having emulsification capability was further mixed. Next, the dry granulated soybean protein was put as the dry textured vegetable protein, *konnyakuimo* powder was mixed as the food containing water-soluble polysaccharide, and the canola oil and lard as the edible oil/fat are further mixed to be emulsified, and the dry granulated soybean protein was impregnated with the seasoning liquid. After that, water was added and adjusted to reach a fixed quantity. After sufficiently agitating, the heating process was performed at 95 °C. The liquid seasoning containing the flaked plant-based meat product (flaked plant-based meat product contained liquid seasoning) was thereby prepared, and the flaked plant-based meat product (flaked soybean protein) was taken out from the prepared flaked plant-based meat product contained liquid seasoning. Then, the flavor (soaked flavor, odor derived from soybean protein) and the meat texture (soft smooth texture and juiciness of meat) when eating the plant-based meat product were confirmed and evaluated.

Table 1 (Table 1-1 and Table 1-2, hereinafter the same) shows the results as test examples 1 to 3. Table 1 also shows the results (comparative examples 1 to 5) by the method shown in Table 1 for comparison. Herein, the comparative examples 1 to 4 show the results when the pretreatment shown in Table 1 was performed to the dry granulated soybean protein with the composition shown in Table 1. The comparative example 5 shows the result when the pretreatment was not performed and the *konnyakuimo* powder was not used as the food containing water-soluble polysaccharide.

The evaluation was shown as the average value (rounded to integer) which is obtained by scoring 1 to 5 according to the following evaluation criteria. In addition, a sensory inspector's opinion is described as remarks. The details will be described later.

### Evaluation Criteria 1: Soaked Flavor

5. Very favorable due to strong soaked flavor and sufficient flavor of cooked plant-based meat product.
4. Favorable due to slightly strong soaked flavor and flavor of cooked plant-based meat product.
3. Tolerance due to soaked flavor and flavor of cooked plant-based meat product.
2. Unfavorable due to slightly weak soaked flavor and insufficient flavor of cooked plant-based meat product.
1. Very unfavorable due to weak soaked flavor and extremely insufficient flavor of cooked plant-based meat product.
Evaluation Criteria 2: Presence of Odor Derived From Vegetable Protein 5. Very favorable due to no odor and sufficient flavor of cooked plant-based meat product.
4. Favorable due to very little odor and flavor of cooked plant-based meat product.
3. Tolerance due to slight odor and flavor of cooked plant-based meat product.
2. Unfavorable due to little odor and little strange flavor of cooked plant-based meat product.
1. Very unfavorable due to odor and strange flavor of cooked plant-based meat product.

### Evaluation Criteria 3: Soft Smooth Texture

5: Very favorable meat texture having soft smooth texture like meat.
4: Favorable meat texture having little soft smooth texture like meat.
3. Tolerance meat texture having very little soft smooth texture like meat.
2. Unfavorable meat texture slightly lacking soft smooth texture like meat.
1. Very unfavorable meat texture lacking soft smooth texture like meat.

### Evaluation Criteria 4: Juiciness of Meat

5. Very favorable meat texture because meat juice like seasoning liquid comes out in a very large quantity when chewing.
4. Favorable meat texture because meat juice like seasoning liquid comes out in a large quantity when chewing.
3. Tolerance meat texture because meat juice like seasoning liquid slightly oozes before chewing.
2. Unfavorable meat texture because meat juice like seasoning liquid oozes a little before chewing.
1. Very unfavorable meat texture because meat juice like seasoning liquid oozes before chewing.

### Evaluation Criteria 5: Comprehensive Evaluation

5. Very favorable because plant-based meat product is extremely similar to meat menu.
4. Favorable because plant-based meat product is similar to meat menu.
3. Tolerance because plant-based meat product is slightly similar to meat menu.
2. Unfavorable because plant-based meat product is slightly different from meat menu.
1. Very unfavorable because plant-based meat product is different from meat menu.

After performing the following discrimination trainings A) to C), an inspector who has made especially outstanding achievement, has had an experience in product development, knows well in a quality such as test and texture of a food product, and can perform absolute evaluation on each sensory inspection item was chosen as a sensory inspector.

A) Taste quality discrimination test which accurately discriminates a sample of each of five tastes (sweet taste: sugar taste, sour taste: tartaric acid taste, *umami:* monosodium glutaminate taste, salty taste: natrium chloride taste, bitter taste: caffeine taste) from seven samples in total in which two types of distilled water are added to the water solutions, which are produced for the five tastes, having concentrations similar to the thresholds of the respective components.
B) Concentration difference discrimination test which accurately discriminates a concentration difference in five types of sodium chloride solutions and acetic acid aqueous solutions each having a slightly different concentration.
C) Three-point discrimination test which accurately discriminates soy sauce produced by a company B from three samples in total of two types of soy sauces from a company A and one type of soy sauce from the company B.

After the standard sample was previously evaluated by all inspectors for the above all evaluation items, and each score of the evaluation criteria was standardized, the objective sensory inspection was performed by 10 people. Each evaluation item was evaluated by selecting any one of the numbers closest to the own evaluation of each inspector from the five levels of scores of each item. The total of the evaluation results was calculated from the arithmetic mean value of the scores of 10 people.

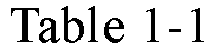

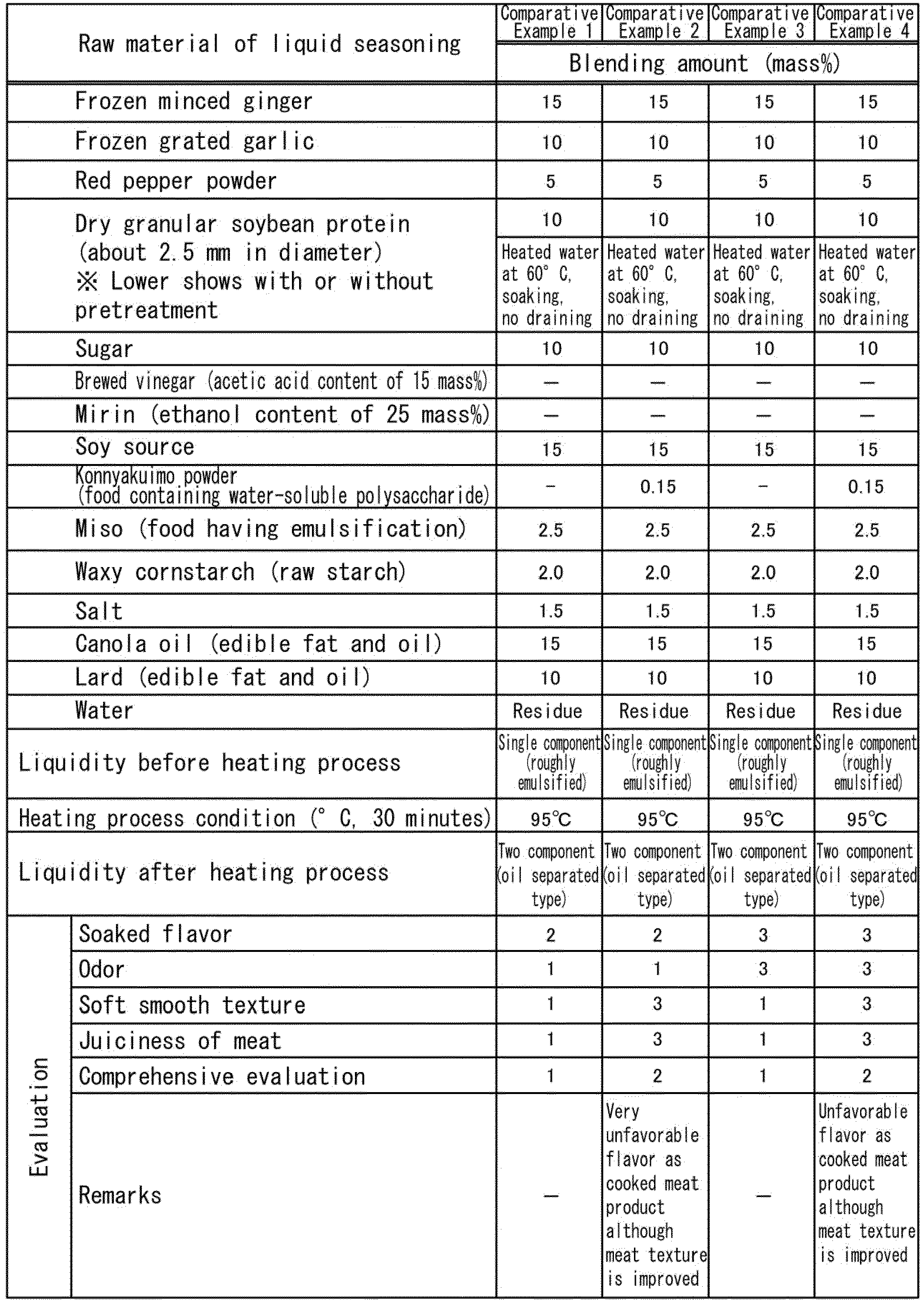

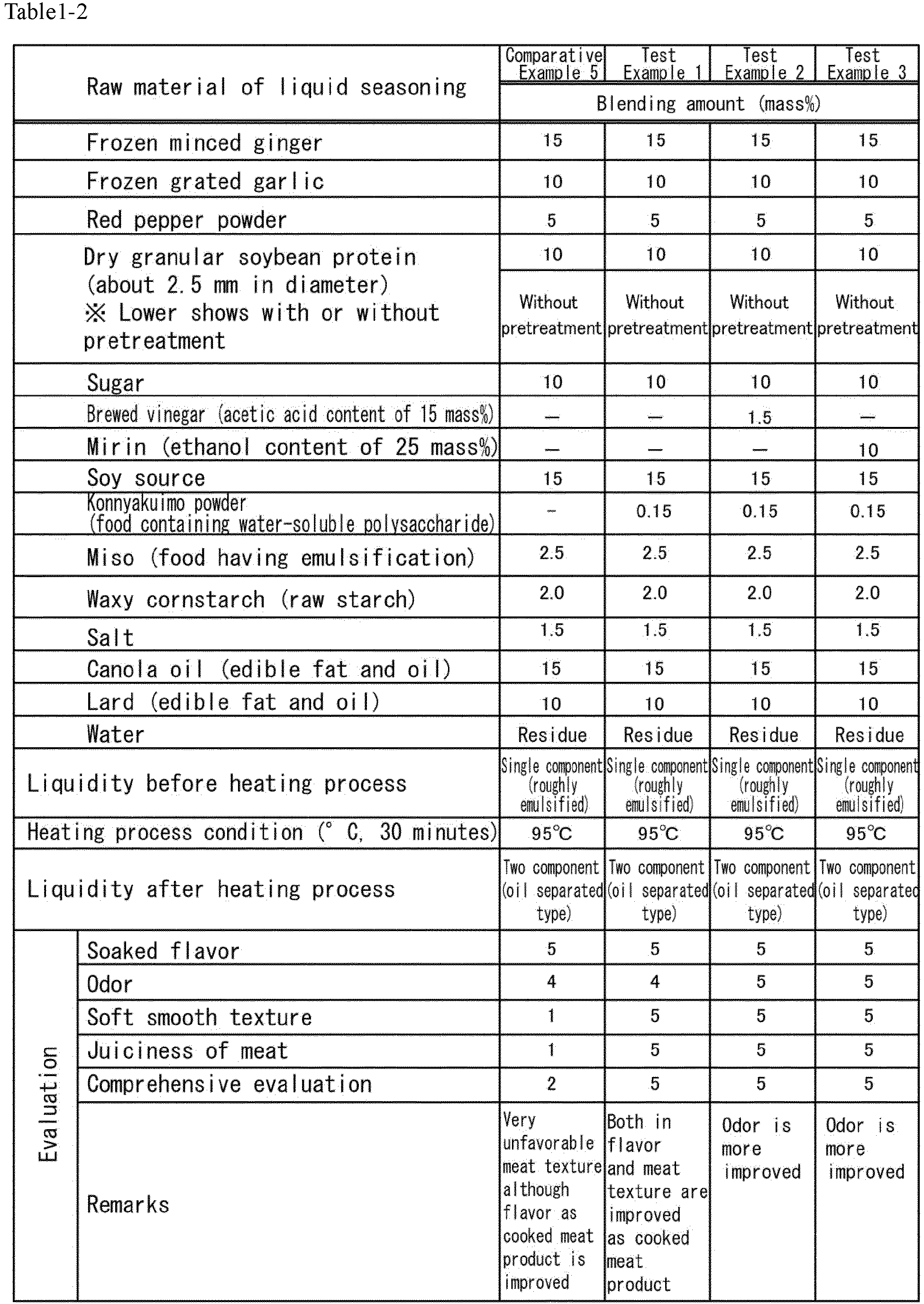

As a result, after soaking the conventional soybean protein in heated water at 60 °C, without draining, the odor derived from the soybean protein was strong and the soaked flavor was weakened (refer to comparative example 1). When the *konnyakuimo* powder containing water-soluble polysaccharide was blended, without draining, the soft smooth texture and the juiciness of meat tended to improve, but the evaluation was not significantly improved due to the poor soaked flavor (refer to comparative example 2). On the other hand, with draining, although the soaked flavor and the odor were improved to be within a tolerance range, the meat texture was unfavorable (refer to comparative example 3). When the *konnyakuimo* powder containing the water-soluble polysaccharide was blended, with draining, the soft smooth texture and the juiciness of meat tended to improve, but the evaluation was not significantly improved due to the poor soaked flavor (refer to comparative example 4). On the other hand, when the soybean protein was used with a dried state without performing the pretreatment, the odor was improved by sufficiently impregnating with the seasoning liquid. However, at this time, when the *konnyakuimo* powder containing the water-soluble polysaccharide was not blended, the soft smooth texture and the juiciness of meat were not improved (refer to comparative example 5).

On the other hand, it was found that when the soybean protein was used without the pretreatment, and the *konnyakuimo* powder containing the water-soluble polysaccharide was blended, both of the flavor and the meat texture were improved as a meat menu (refer to test example 1). Moreover, it was found that the odor was further improved by blending the acetic acid and the ethanol (refer to test example 2 and comparative example 3). The texture (grain texture and fiber texture) by a physical resistance when chewing was given in all of the preparation examples by the used soybean protein. The flaked plant-based meat product contained liquid seasoning prepared in the above test examples (test examples 1 to 3) could be directly used as a mixing of *mapo-tofu* (spicy Sichuan dish of tofu), and had a quality which compares favorably with the one using a meat.

### Example 2: Preparation of chinjaoro-su (Chinese style pepper steak) like plant-based meat product

The preparation of the plant-based meat product taken out from the plant-based meat contained liquid seasoning, which is described in the third to fifth embodiments, was herein studied. Larger block soybean protein (block type of 0.5 mm in diameter and about 1.5 cm in length) was selected as the dry textured vegetable protein, and this was put in a stainless basket to be soaked in a blending tank. Other than these steps, with the method similar to that in the example 1, the liquid seasoning containing the plant-based meat product was prepared based on the recipe of Table 2 (Table 2-1, Table 2-2, hereinafter the same), and the plant-based meat product was taken out from the prepared plant-based meat product contained liquid seasoning (preparation of plant-based meat product).

After the oil of the seasoning liquid was separated, the oil of the surface layer was sucked, and then the *chinjaoro-su* was finally prepared by using the plant-based meat product taken out with the basket as a substitute for a meat. After that, the evaluation was performed similar to the example 1. Table 2 shows the results as test examples 4 to 6. In addition, Table 2 also shows the results (comparative examples 6 to 10) by the method shown in Table 2 for comparison.

In addition, the *chinjaoro-su* was prepared by the following steps.
1) Oil, garlic, and ginger put in a frying pan were put over heat, and then the plant-based meat product of the above each preparation example was added after smelling to be stir-fried.
2) Thinly sliced green pepper, red pepper, and bamboo shoots were added and fried.
3) After evenly pouring a seasoning of a mixture of *mentsuyu* (noodle soup), oyster sauce, and sake for cooking (2:1:1), salt and pepper were appropriately added, and then sesame oil was dropped for finishing.

**Table 2-1**

| Raw material of liquid seasoning | | | Comparative Example 6 | Comparative Example 7 | Comparative Example 8 | Comparative Example 9 |
|---|---|---|---|---|---|---|
| | | | Blending amount (mass%) | | | |
| | Dry block soybean protein (about 0.5 mm in diameter, 1. 5cm in length) 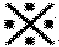 Lower shows with or without pretreatment | | 10 | 10 | 10 | 10 |
| | | | Heated water at 60° C, soaking, no draining | Heated water at 60° C, soaking, no draining | Heated water at 60° C, soaking, draining | Heated water at 60° C, soaking, draining |
| | Sugar | | 10 | | | |
| | Brewed vinegar (acetic acid content of 15 mass%) | | - | - | - | - |
| | Mirin (ethanol content of 25 mass%) | | - | - | - | - |
| | Soy source | | 15 | | | |
| | Konnyakuimo powder (food containing water-soluble polysaccharide) | | - | 0.15 | - | 0.15 |
| | Miso (food having emulsification) | | 2.5 | 2.5 | 2.5 | 2.5 |
| | Salt | | 1.5 | 1.5 | 1.5 | 1.5 |
| | Canola oil (edible fat and oil) | | 150 | 150 | 150 | 150 |
| | Water | | Residue | Residue | Residue | Residue |
| Liquidity before heating process | | | Single component (roughly emulsified) | Single component (roughly emulsified) | Single component (roughly emulsified) | Single component (roughly emulsified) |
| Heating process condition (° C, 30 minutes) | | | 95°C | 95°C | 95°C | 95°C |
| Liquidity before heating process | | | Two component (oil separated type) | Two component (oil separated type) | Two component (oil separated type) | Two component (oil separated type) |
| Evaluation | | Soaked flavor | 2 | 2 | 3 | 3 |
| | | Odor | 1 | 1 | 3 | 3 |
| | | Soft smooth texture | 1 | 2 | 1 | 2 |
| | | Juiciness of meat | 1 | 2 | 1 | 2 |
| | | Comprehensive evaluation | 1 | 2 | 1 | 2 |
| | | Remarks | - | Very unfavorable flavor as cooked meat product although meat texture is improved | - | Unfavorable flavor as cooked meat product although meat texture is slightly improved |

**Table 2-2**

| Raw material of liquid seasoning | | | Comparative Example 10 | Test Example 4 | Test Example 5 | Test Example 6 |
|---|---|---|---|---|---|---|
| | | | Blending amount (mass%) | | | |
| | Dry block soybean protein (about 0. 5 mm in diameter, 1. 5cm in length) 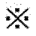 Lower shows with or without pretreatment | | 10 | 10 | 10 | 10 |
| | | | Without pretreatment | Without | Without pretreatment | Without |
| | | | | pretreatment | | pretreatment |
| | Sugar | | | | | |
| | Brewed vinegar (acetic acid content of 15 mass%) | | - | - | 1.5 | - |
| | Mirin (ethanol content of 25 mass%) | | - | - | - | 10 |
| | Soy source | | | | | |
| | Konnyakuimo powder (food containing water-soluble polysaccharide) | | - | 0.15 | 0.15 | 0.15 |
| | Miso (food having emulsification) | | 2.5 | 2.5 | 2.5 | 2.5 |
| | Salt | | 1.5 | 1.5 | 1.5 | 1.5 |
| | Canola oil (edible fat and oil) | | 150 | 150 | 150 | 150 |
| | Water | | Residue | Residue | Residue | Residue |
| Liquidity before heating process | | | Single component (roughly emulsified) | Single component (roughly emulsified) | Single component (roughly emulsified) | Single component (roughly emulsified) |
| Heating process condition (° C, 30 minutes) | | | 95°C | 95°C | 95°C | 95°C |
| Liquidity before heating process | | | Two component (oil separated type) | Two component (oil separated type) | Two component (oil separated type) | Two component (oil separated type) |
| Evaluation | | Soaked flavor | 5 | 5 | 5 | 5 |
| | | Odor | 4 | 4 | 5 | 5 |
| | | Soft smooth texture | 1 | 5 | 5 | 5 |
| | | Juiciness of meat | 1 | 5 | 5 | 5 |
| | | Comprehensive evaluation | 2 | 5 | 5 | 5 |
| | | Remarks | Very unfavorable meat texture although flavor as cooked meat product is improved | Both in flavor and meat texture are improved as cooked meat product | Odor is more improved | Odor is more improved |

As a result, as shown in Table 2, it was found that the effect of the present disclosure was achieved by the plant-based meat product taken out from the seasoning liquid (as described in third to fifth embodiments) similar to the flaked plant-based meat product in the plant-based meat product contained seasoning liquid prepared in the example 1.

### Example 3: Verification of Optimum Concentration Range of Food Containing Water-Soluble Polysaccharide in Seasoning Liquid

Herein, the optimum concentration range of the food containing water-soluble polysaccharide in the seasoning liquid (liquid seasoning) was verified. The recipe shown in Table 3 was used, and for example, the blending amount of the food containing water-soluble polysaccharide was changed from that in the example 1. Other than that, the liquid seasoning containing the plant-based meat product was prepared, and the plant-based meat product was taken out from the prepared plant-based meat product contained liquid seasoning similar to the example 1. The evaluation was performed similar to the example 1 (test examples 7 to 12 and comparative examples 11 to 12). A soybean lecithin was used instead of the *miso* as the food having emulsification capability. Table 3 shows the results.

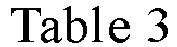

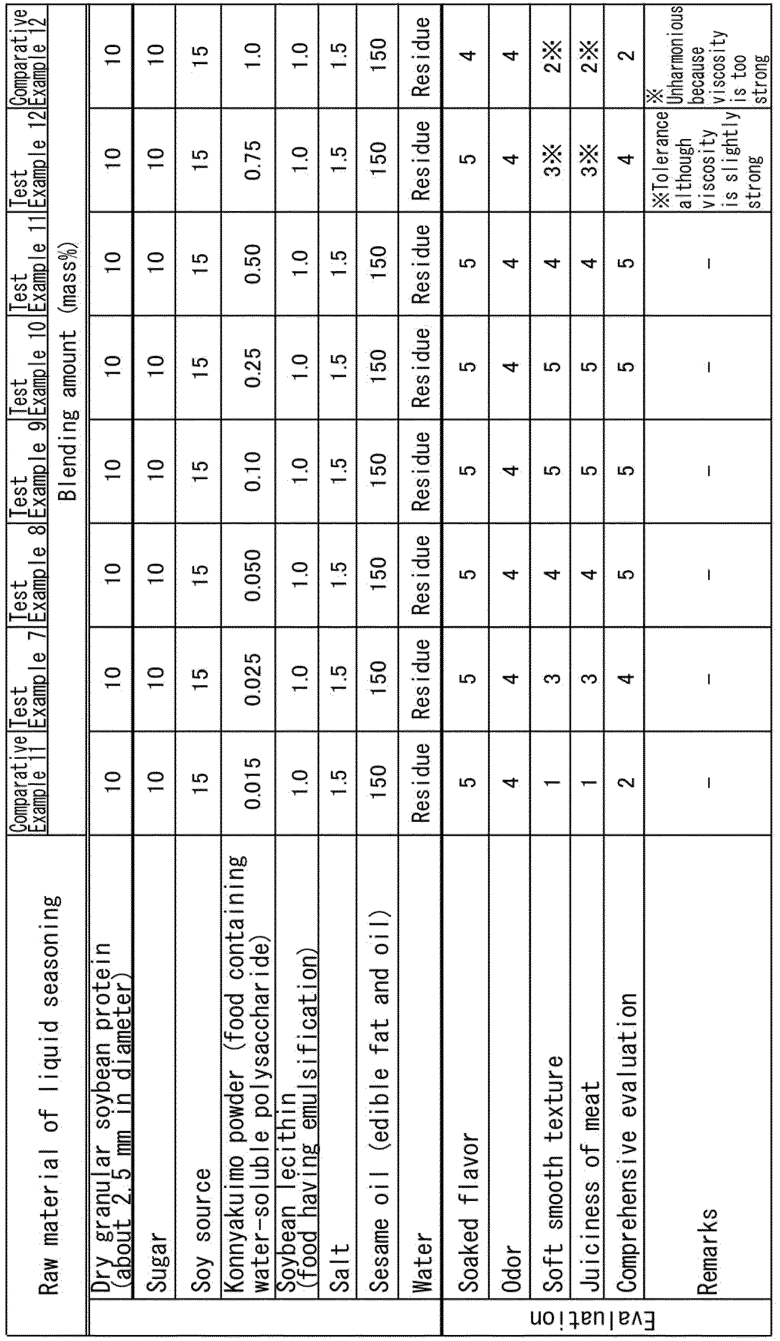

As a result, it was found although the lower limit of the concentration of the food containing water-soluble polysaccharide in the seasoning liquid was normally 0.02 mass% or more, it was preferable for the lower limit to be 0.025 mass% or more, and more preferable to be 0.05 mass%, in terms of the achievement of the effect of the present disclosure. It was also found although the lower limit was normally 0.9 mass% or less in terms of unharmonious due to an excessive viscosity, it was preferable for the lower limit to be 0.75 mass% or less, and more preferable to be 0.5 mass% or less in terms of preferable meat texture.

### Example 4: Verification of Optimum Concentration Range of Acetic Acid in Seasoning Liquid

Herein, the range of the optimum concentration of the acetic acid, which is preferably used in the present disclosure because it strongly controls the odor derived from the textured vegetable protein, was verified. The brewed vinegar having the amount (acetic acid content of 15 mass%) shown in Table 4 was used, and the receipt shown in Table 4 was used. Other than that, the liquid seasoning containing the plant-based mat product was prepared, and the plant-based meat product was taken out from the prepared plant-based meat product contained liquid seasoning similar to the example 3. The evaluation was performed similar to the example 3 (test examples 13 to 22). Table 4 shows the results.

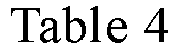

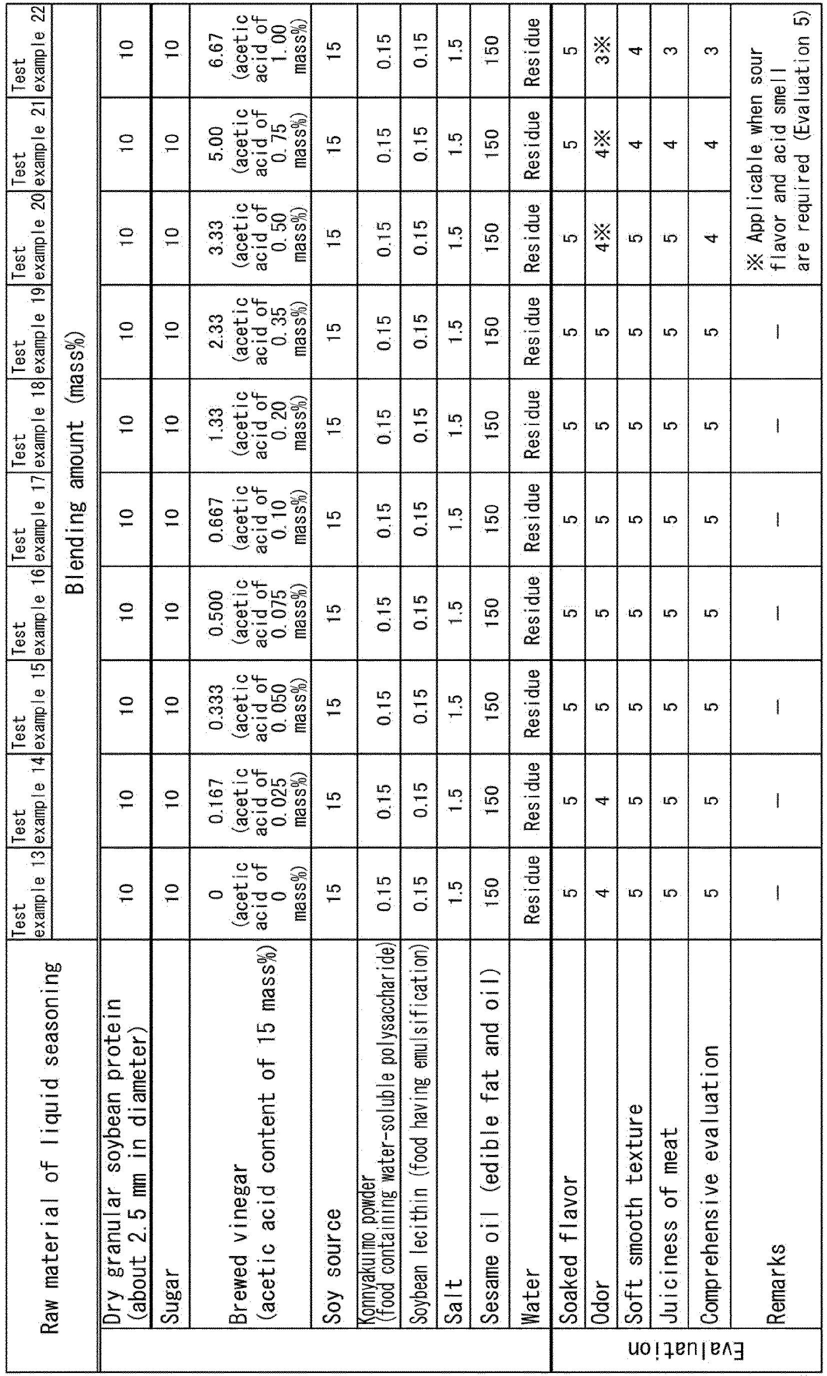

As a result, it was found although it was not always necessary to contain the acetic acid to achieve the effect of the present disclosure, it was more preferable for the lower limit of the acetic acid content in the seasoning liquid to be 0.05 mass% or more, in order to strongly control the flavor derived from the textured vegetable protein. On the other hand, it was found that it was preferable for the upper limit of the acetic acid content in the seasoning liquid to be 1.0 mass% or less, more preferable to be 0.75 mass% or less, further preferable to be 0.5 mass%, and still further preferable to be 0.35 mass%, in terms of the impact (probably slow hydrolytic action under heating) on the water-soluble polysaccharide due to the acetic acid.

### Example 5: Verification of Optimum Concentration Range of Ethanol in Seasoning Liquid

Herein, the range of the optimum concentration of the ethanol, which is preferably used in the present disclosure because it strongly controls the odor derived from the textured vegetable protein, was verified. The *mirin* with the amount (ethanol content of 25 mass%) shown in Table 5 was used, and the recipe shown in Table 5 was used. Other than that, the liquid seasoning containing the plant-based meat product was prepared, and the plant-based meat product was taken out from the prepared plant-based meat product contained liquid seasoning similar to the example 3. The evaluation was performed similar to the example 3 (test examples 23 to 31). Table 5 shows the results.

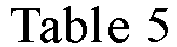

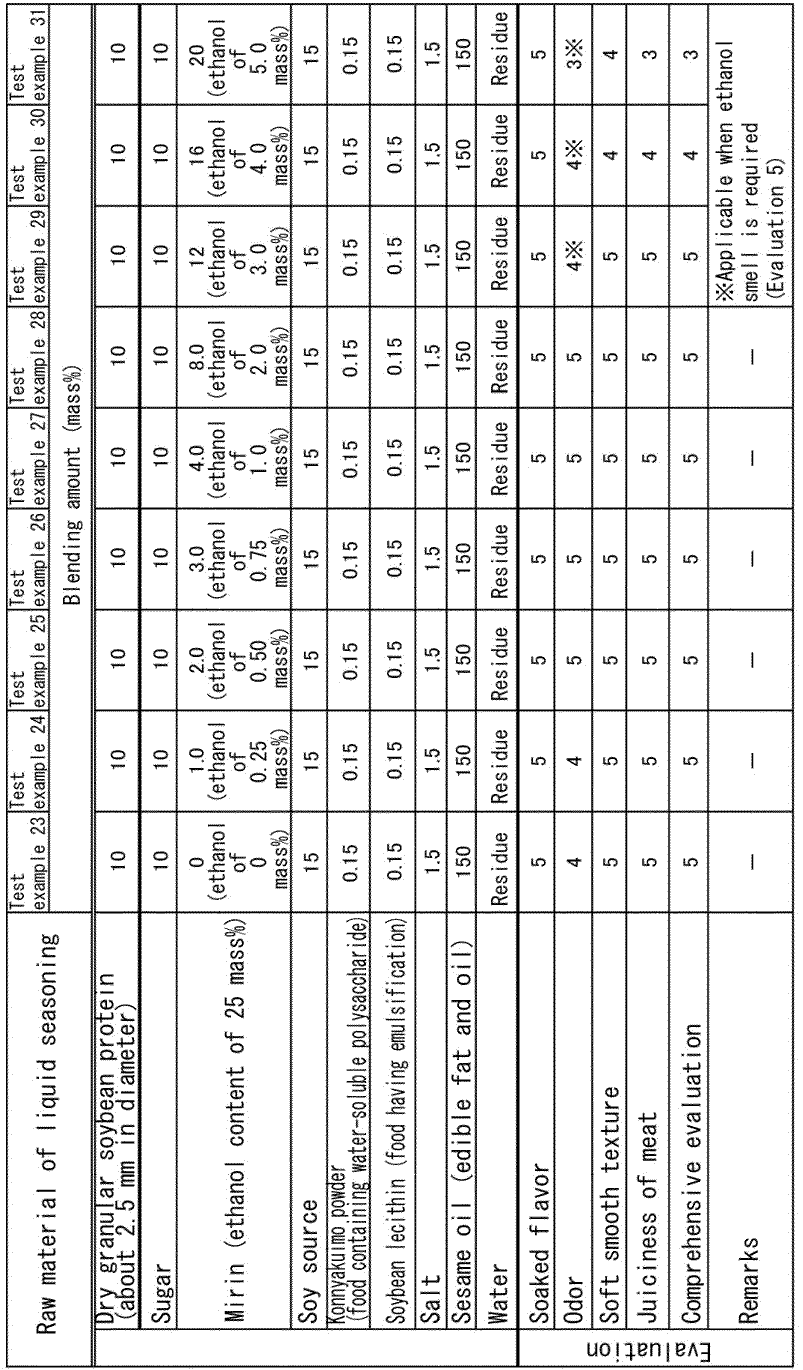

As a result, it was found although it was not always necessary to contain the ethanol, it was more preferable for the lower limit of the ethanol content in the liquid seasoning to be 0.5 mass% or more, in order to strongly control the flavor derived from the textured vegetable protein. On the other hand, it was found that was preferable for the upper limit of the ethanol content in the liquid seasoning to be 5.0 mass% or below, more preferable to be 4.0 mass% or below, further preferable to be 3.0 mass% or below, and still further preferable to be 2.0 mass% or below, in terms of the impact (probably controlling of viscosity of water-soluble polysaccharide) on the water-soluble polysaccharide due to the ethanol.

### Example 6: Verification of Type of Food Containing Water-Soluble Polysaccharide

Herein, the type of the food containing water-soluble polysaccharide except the *konnyakuimo* powder selected in the examples 1 to 5 was studied as the food containing water-soluble polysaccharide. The food containing water-soluble polysaccharide shown in Table 6 was used instead of the *konnyakuimo* powder based on the recipe shown in Table 6, and the block soybean protein was used. Other than those, the liquid seasoning containing the plant-based meat product was prepared, and the plant-based meat product was taken out from the prepared plant-based meat product contained liquid seasoning similar to the example 1. The evaluation was performed similar to the example 1 (test examples 32 to 34). Hot water extracted powder of *kombu* (kelp) (water-soluble polysaccharide content: 85 mass%) was used as the extract of *kombu.* The *yamatoimo* powder (water-soluble polysaccharide content: 35 mas%) which is one type of the *nagaimo* was used as the *nagaimo* powder. Table 6 shows the results.

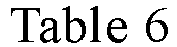

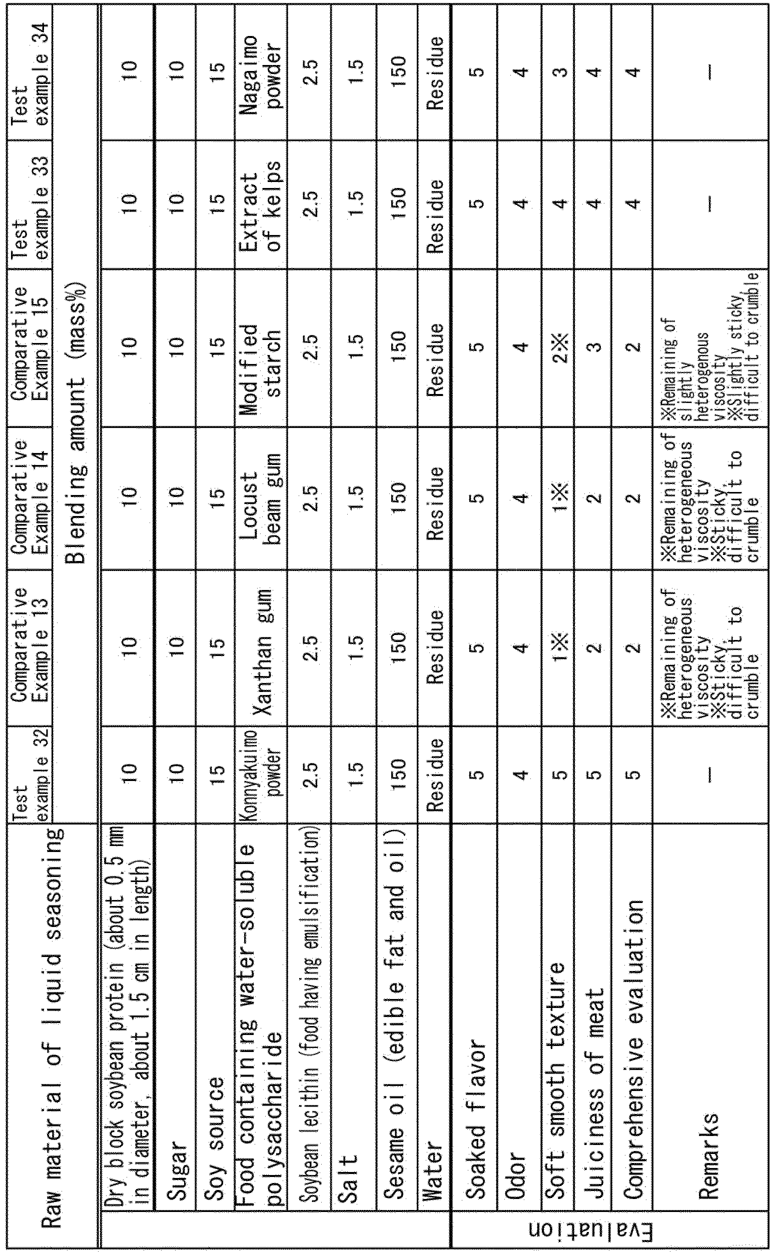

As a result, it was found that the effect of the present disclosure was achieved by each food containing water-soluble polysaccharide except the *konnyakuimo* powder. More specifically, all of the *konnyakuimo* powder, the extract of *kombu,* and the *yamatoimo* power have flavor and meat texture, and can prepare the plant-based meat product having a preferable breakability of a chunk meat. In particular, it was found that the *konnyakuimo* powder was especially preferable in terms of the achievement of the effect of the present disclosure and no influence on the flavor of the liquid seasoning. On the other hand, xanthan gum, locust bean gum, and modified starch, which were thicker as food additives, left a strong extraneous viscosity derived from water-soluble polysaccharide, and provided strange meat texture. The effect of the present disclosure was not achieved (comparative examples 13 to 15).

### Example 7: Preparation of Hamburger Like Plant-Based Meat Product

Herein, the hamburger like plant-based meat product was prepared with the information of the examples 1 to 6. The plant-based meat product was only separated similar to the example 2 from the plant-based meat product contained liquid seasoning prepared in the text example 2 of the example 1 to be used as the substitute for a ground meat. With respect to 300g of a plant-based meat product, four tablespoons of bread crumb, four tablespoons of soymilk, a half piece of grated garlic, a half teaspoon of salt, a half tablespoon of sugar, a little paper, beef extract powder, a little ANT-11 (produced by Fuji Foods Corporation), one small minced and fried onion are added, and the ingredients are kneaded, formed, and degassed. Thereby, a palm-sized hamburger like plant-based meat product was prepared. Next, oil was poured thinly in a pan over medium heat, and the hamburger like plant-based meat product was put in the pan. The hamburger like plant-based meat product was baked over medium heat for two minutes, such that one side thereof was browned. After overturning, the hamburger like plant-based meat product was carefully baked in casserole with a lid over low heat. After taking out the hamburger like plant-based meat product, three tablespoons of ketchup, one and half tablespoons of Worcester sauce, and one tablespoon of soy sauce were put in the pan, and were lightly boiled down while mixing to make a sauce. Then, the sauce was poured on the previously dished up hamburger like plant-based meat product. Thereby, the hamburger like plant-based meat product was prepared.

On the other hand, a hamburger was prepared similar to the above with ground beef and pork (beef 6:pork 4). In contrast to this, the above prepared hamburger like plant-based meat product was evaluated similar to the example 1 (test example 35 and comparative example 16). However, the following one item (evaluation criteria 6) was added as the evaluation criteria. Table 7 shows the results.

### Evaluation Criteria 6: Breakability of Chunk Meat

5. Very favorable because plant-based meat product is difficult to crumble.
4. Favorable because plant-based meat product is slightly difficult to crumble.
3. Tolerance although plant-based meat product slightly crumbles.
2. Unfavorable because plant-based meat product is slightly easy to crumble.
1. Very unfavorable because plant-based meat product easily crumbles

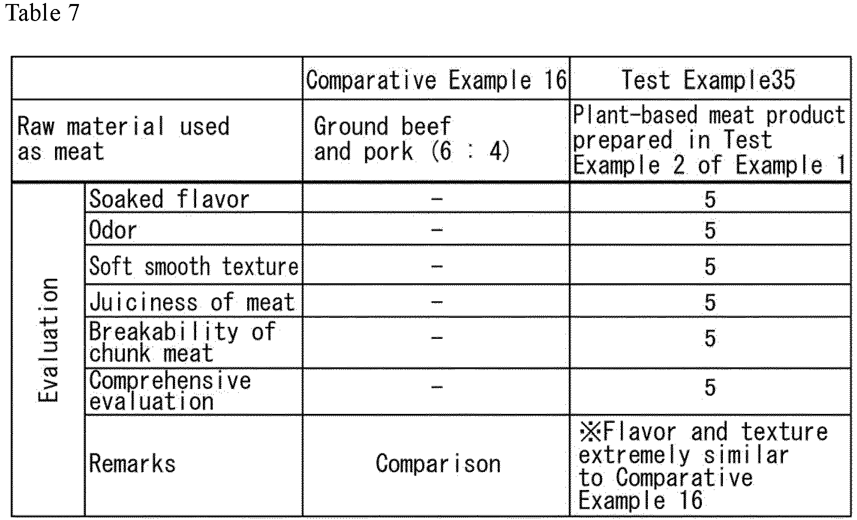

As a result, the prepared hamburger like plant-based meat product (test example 35) was extremely similar and comparable to the hamburger prepared by using the ground beef and pork (beef 6:pork 4), in terms of not only meat texture (grain texture and fiber texture) derived from the textured protein but also soaked flavor, flavor without odor, and meat texture (soft smooth texture, juiciness of meat, and breakability of chunk meat) except the above in the present disclosure. The effect of the present disclosure was apparently achieved.

### Example 8: Study of Heating Process Temperature

In the examples 1 to 7, the heating process temperature was set to 95 °C as a typical temperature. Herein, the heating process was performed at various temperatures shown in Table 8, the liquid seasoning containing the plant-based meat product similar to the example 1 was prepared, and the evaluation was performed similar to the example 1 (test examples 36 to 39). Table 8 shows the results.

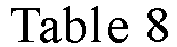

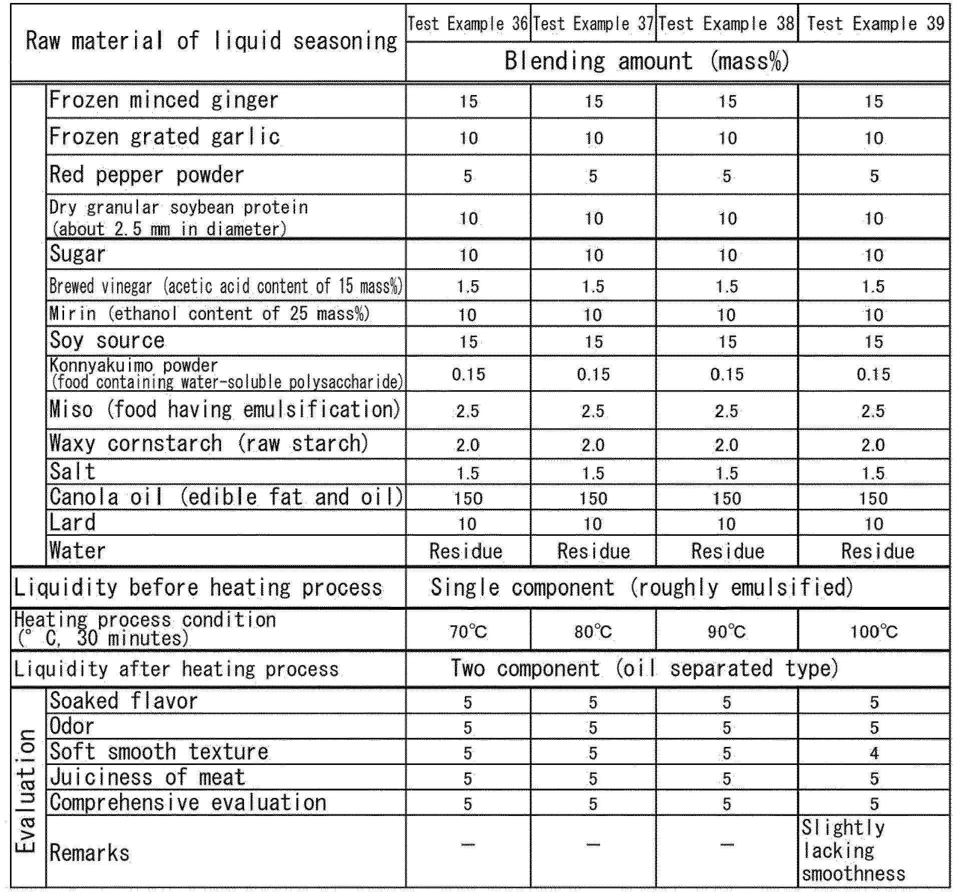

As a result, when the heating process temperature was 100 °C, the soft smooth texture of the meat texture slightly lacked. However, when the heating process temperature was 90 °C, there was no problem with such soft smooth texture, and also when the heating process temperature was 95 °C in the text examples 1 to 3 of the example 1, there was no problem either on such soft smooth texture. Accordingly, it was recognized that the meat texture when eating (soft smooth texture and juiciness of meat) except the meat texture (grain texture and fiber texture) by a physical resistance when chewing and the flavor (sufficiently soaked flavor and no odor derived from soybean protein) similar to a cooked meat could be given in a range of 70 °C to 100 °C. It was thus found that the range of the heating process temperature should be the range of 70 °C or more and less than 100 °C.

### INDUSTRIAL APPLICABILITY

According to the first to fifth embodiments, the plant-based meat product to which the flavor (sufficiently soaked flavor and no odor derived from vegetable protein) similar to a cooked and processed meat and the meat texture (soft smooth texture and juiciness of meat) when eating except the meat texture (grain texture and fiber texture) by a physical resistance when chewing are given by using the existing vegetable protein material and without a complex pretreatment, a special raw material, and a special process, and also the liquid seasoning containing such a plant-based meat product can be obtained. Such a plant-based meat product is extremely similar to a meat menu. Accordingly, such a plant-based meat product and the liquid seasoning containing such a plant-plant based meat product can be expected to be applied in a food field.

### CROSS-REFERENCE TO RELATED APPLICATION

The present application is based on and claims priority to Japanese Patent Application No. 2019-014310, filed on January 30, 2019, the disclosure of which is hereby incorporated by reference in its entirety.

## Claims

1. A method of producing a liquid seasoning containing a plant-based meat product, the method comprising:
using a seasoning liquid, a food having emulsification capability, a dry textured vegetable protein, a food containing water-soluble polysaccharide, and edible oil/fat, as essential raw material components;
mixing the essential raw material components;
emulsifying the seasoning liquid; and
performing a heating process at 70 °C or more and less than 100 °C after impregnating the dry textured vegetable protein with the obtained emulsified liquid seasoning.

2. The method of producing a liquid seasoning according to claim 1, wherein the seasoning liquid contains acetic acid and/or ethanol.

3. The method of producing a liquid seasoning according to claim 2, wherein a content of the acetic acid in the seasoning liquid is 1.0 mass% or less.

4. The method of producing a liquid seasoning according to claim 2, wherein a content of the ethanol in the seasoning liquid is 5.0 mass% or less.

5. The method of producing a liquid seasoning according to any one of claims 1 to 4, wherein a content of a water-soluble polysaccharide of the food containing water-soluble polysaccharide in the seasoning liquid is 0.02 mass% or more and 0.9 mass% or less.

6. The method of producing a liquid seasoning according to any one of claims 1 to 5, wherein the dry textured vegetable protein is a dry textured soybean protein.

7. The method of producing a liquid seasoning according to any one of claims 1 to 6, wherein the food having emulsification capability is a non-heat resistant emulsified food which loses the emulsification capability by the heating process.

8. The method of producing a liquid seasoning according to claim 7, wherein the non-heat resistant emulsified food under a temperature of less than 100 °C is one or more selected from, *miso,* egg yolk, *tobanjan,* soy sauce, and soy milk.

9. The method of producing a liquid seasoning according to any one of claims 1 to 8, wherein the food containing water-soluble polysaccharide is one or more selected from *konnyakuimo* powder, extract of kelps, and *nagaimo* powder.

10. A liquid seasoning containing a plant-based meat product, which is obtained by the method according to any one of claims 1 to 9.

11. A method of producing a plant-based meat product, the method comprising:
producing a liquid seasoning containing a plant-based meat product by the method according to any one of claims 1 to 9; and
taking out the contained plant-based meat product from the obtained liquid seasoning.

12. A plant-based meat product having improved meat texture, which is obtained by the method according to claim 11.

13. A method of producing a plant-based meat product having improved meat texture, the method comprising:
using a seasoning liquid, a food having emulsification capability, a dry textured vegetable protein, a food containing water-soluble polysaccharide, and edible oil/fat, as essential raw material components;
mixing the essential raw material components;
emulsifying the seasoning liquid;
performing a heating process at 70 °C or more and less than 100 °C after impregnating the dry textured vegetable protein with the emulsified seasoning liquid to produce a liquid seasoning containing a plant-based meat product; and
taking out the contained plant-based meat product from the obtained liquid seasoning.
